# EUROPEAN PATENT SPECIFICATION

(11) **EP 4 282 760 B1**
(45) Date of publication and mention of the grant of the patent: **23.07.2025**
(21) Application number: 23175783.2
(22) Date of filing: 26.05.2023
(51) Int. Cl.: B64D 11/06, B60N 2/22

(54) **PASSENGER SEAT WITH FORWARD ADJUSTABLE BACKREST**
FAHRGASTSITZ MIT NACH VORNE VERSTELLBARER RÜCKENLEHNE
SIÈGE PASSAGER AVEC DOSSIER RÉGLABLE VERS L'AVANT

(30) Priority: 26.05.2022 IN 202241030327; 31.03.2023 US 202318129610
(43) Date of publication of application: 29.11.2023
(73) Proprietor: Rockwell Collins, Inc., Cedar Rapids, IA 52498 (US)
(72) Inventor: KANCHARLA, Seeta R, Hyderabad (IN)
(74) Representative: Dehns

(56) References cited:
- EP-B1- 3 604 133
- JP-U- S63 147 326
- US-A1- 2019 308 732
- US-B1- 9 326 608
- US-B2- 6 695 378

## Description

### TECHNICAL FIELD AND BACKGROUND

The present disclosure relates generally to a passenger seat for a conveyance such as an aircraft, and more particularly to a passenger seat equipped with a mechanism for adjusting a backrest relative to a seat pan to accommodate passengers of different statures.

Passenger seats in conveyances such as aircraft are designed to accommodate a predetermined percentile of the traveling population. For example, aircraft passenger seats may be designed to accommodate the 90% or 95% percentile adult male passenger in terms of stature. As such, the ergonomics of the passenger seat may not be supportive and comfortable for the 10% or 5% passenger stature falling outside of the predetermined range, for instance passengers of short stature and children.

Most passenger seats are equipped with a seat pan and a backrest providing comfort and support to the passenger via a cradling sitting position. In the case of airliners and economy class seats, the seat pan is typically fixed with a slight forward incline and the backrest is minimally reclinable between taxi, takeoff and landing (TTOL) and in-flight sitting positions. In premium seating classes, the greater seat pitch allows for greater seat adjustability and in some cases lie flat seats.

In any of the achievable sitting positions of conventional passenger seats, the seat pan has a fixed minimal length, and the backrest may change in angle relative to the seat pan but does not translate forward or aft relative to the seat pan. As such, the seat pan may be too long to allow the knees of passengers of short stature to properly bend around the forward end of the seat pan. During long haul flights, the inability of a passenger to bed their knees at the forward end of the seat pan can become uncomfortable and, in some instances, cause the passenger to move their back off the backrest to position their knees farther forward to reach the forward end of the seat pan. Such shifting on the seat positions the passenger out of sync with the seat support elements and decreases the effectiveness of the passenger restraint.

EP 3 604 133 B1 discloses an aircraft divan with an adjustable backrest. US 2019/308732 A1 and JP S63 147326 U are further examples of prior art seats.

Therefore, what is needed is a passenger seat with adjustment capability to accommodate passengers of different statures to provide proper ergonomics for all traveling passengers.

### SUMMARY

Broadly speaking, the present disclosure provides a passenger seat, for instance an aircraft passenger seat, equipped with a translation backrest for adjusting seat ergonomics to accommodate passengers of different statures.

To achieve the foregoing and other advantages, there is provided a passenger seat as defined by claim 1.

In some embodiments, each of the spaced vertical members defines an elongate linear slot, the moving frame is disposed in and travels along the elongate linear slots of the spaced vertical members, and each of the spaced vertical members defines at least one guideway receiving at least one guide of the backrest, the at least one guide configured to travel along the at least one guideway as the backrest translates relative to the backrest frame.

In some embodiments, the actuator includes a handle, dial or the like formed at the end of the actuator opposite the externally threaded end operable for manipulating the actuator to rotate the actuator, and wherein the handle is positioned above the backrest frame to be accessible from above the seat.

In some embodiments, each of the plurality of links are pivotally attached at opposing ends to the moving frame and to the backrest.

In some embodiments, the backrest frame further includes vertically oriented rollers positioned along the at least one guideway facilitating movement of the at least one guide along the at least one guideway.

In some embodiments, the seat pan is fixed, the backrest frame is pivotally attached to the seat pan, and pivoting motion of the backrest frame relative to the seat pan is independent of translation motion of the backrest relative to the seat pan.

### BRIEF DESCRIPTION OF THE DRAWINGS

Implementations of the inventive concepts disclosed herein may be better understood when consideration is given to the following detailed description thereof. Such description refers to the included drawings, which are not necessarily to scale, and in which some features may be exaggerated, and some features may be omitted or may be represented schematically in the interest of clarity. Like reference numbers in the drawings may represent and refer to the same or similar element, feature, or function. In the drawings:
FIG. 1 shows a front isometric view of a passenger seat equipped with a backrest adjustment mechanism according to the present disclosure;
FIG. 2 shows a rear isometric view of the passenger seat of FIG. 1;
FIG. 3 shows an exploded view of the passenger seat of FIG. 1;
FIG. 4 shows a side view of the passenger seat of FIG. 1 with the backrest in a fully aft position; and
FIG. 5 shows a side view of the passenger seat of FIG. 1 with the backrest in a fully forward position.

### DETAILED DESCRIPTION

The description set forth below in connection with the appended drawings is intended to be a description of various, illustrative embodiments of the disclosed subject matter. Specific features and functionalities are described in connection with each illustrative embodiment**.** The aspects, features and functions described below in connection with one embodiment are intended to be applicable to the other embodiments described below except where expressly stated or where an aspect, feature or function is incompatible with an embodiment.

Broadly speaking, the present disclosure provides a passenger seat with backrest adjustability for accommodating seat occupants of different statures such that the seat ergonomics are met regardless of the size of the seat occupant. Whereas conventional passenger seats include reclinable backrests, the inventive concepts disclosed herein add the ability to translate the backrest relative to the seat pan, thereby 'shortening' the length of the seat pan to accommodate shorter passengers. The backrest translation is independent of the backrest recline, thus the recline and translation capabilities of the backrest are mutually exclusive. By decreasing the distance between the backrest and the forward end of the seat pan, a seat occupant with shorter thighs can bend their knees around the forward end of the seat while maintaining their back against the front of the backrest. In addition, backrest translation according to the present disclosure moves the entire backrest forward relative to the seat pan, which is different from conventional pivoting motions, lumbar mechanisms, etc.

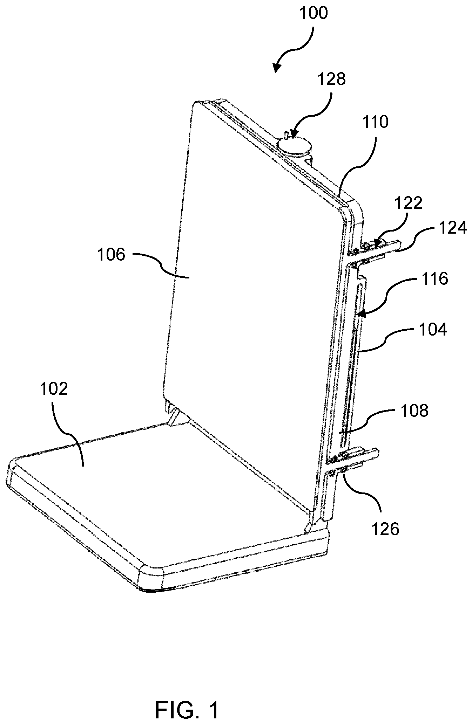

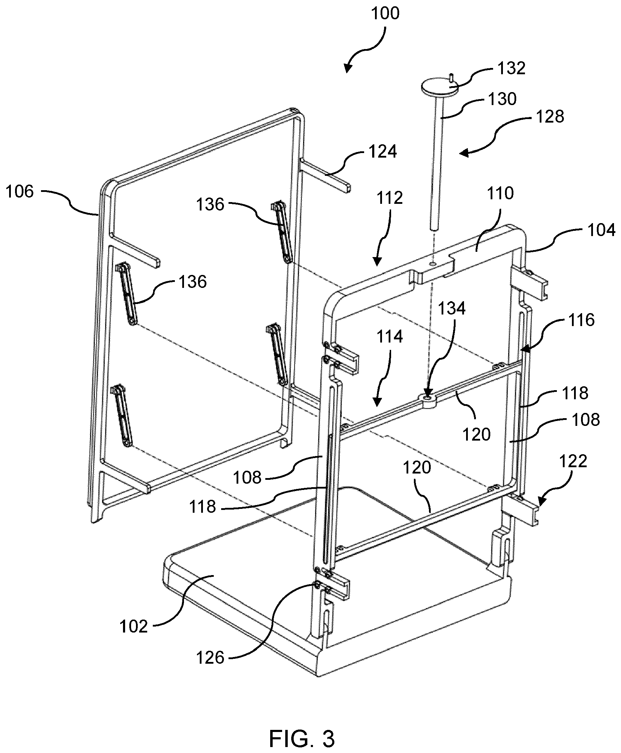

Referring to FIGS. 1-3, a passenger seat according to the present disclosure is shown at reference numeral 100. The passenger seat 100 includes a seat pan 102, a backrest frame 104 coupled to the seat pan, and a backrest 106 movably coupled to and support by the backrest frame. In some embodiments, the backrest frame 104 is pivotally attached to the seat pan or other seat frame member to permit the backrest to recline, for instance during flight. The seat pan 102 may be fixed and oriented with a slight incline toward the forward end to provide a cradling sitting position for comfort. Although not shown, the seat pan 102 may be supported on a seat frame, for example, seat spreaders interconnected by transverse beams wherein the seat pan is attached to the transverse beams. Optional seat elements may include, but are not limited to, armrests, lumbar mechanisms, headrests, thigh bolster, leg rests, etc.

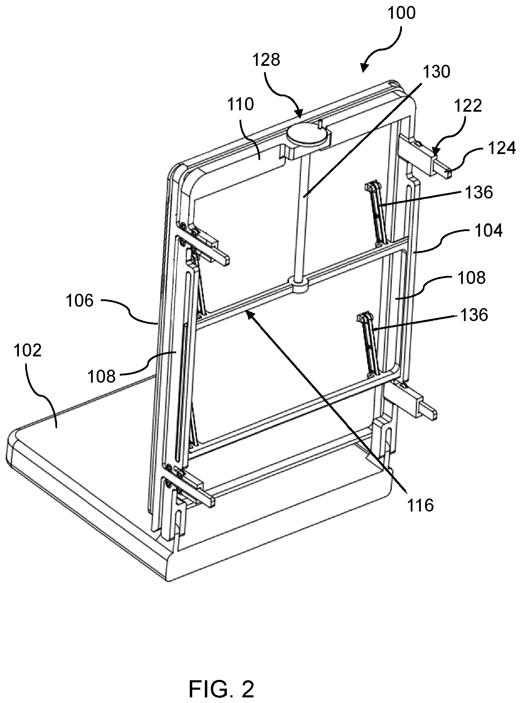

FIGS. 1 and 2 show the backrest 106 in a fully rearward position relative to the seat pan for accommodating, for example, a seat occupant falling within the predetermined percentile of the seat design. The backrest frame 104 includes spaced vertical members 108 and at least one transverse member 110. As shown, the spaced vertical members 108 define the lateral extents of the backrest (i.e., seat width) and the transverse member 110 interconnects the upper ends of the spaced vertical members. As such, the spaced vertical members 108 and the at least one transverse member 110 form a generally U-shaped seat frame in which the terminal lower ends of the spaced frame members 108 are pivotally attached to the seat pan 102. The spaced vertical members 108 and the at least one transverse member 110 collectively form a fixed frame assembly 112, wherein fixed means stationary relative to a movable frame assembly discussed further below but movable relative to the seat pan in terms of pivoting motion.

A moving frame 114 is disposed within elongate slots 116 formed in each of the spaced vertical members 108. The moving frame 114 generally includes spaced vertical members 118 and spaced transverse members 120 forming a frame. The moving frame 114 is configured to translate up and down, i.e., raise and lower, relative to the fixed frame 112. The elongate slots 116 are linear and the length of the slots 116 is determinative of the amount of possible travel of the moving frame 114. In use, translating the moving frame 114 upward, i.e., raising, drives the backrest 106 forward relative to the seat pan 102, and translating the moving frame downward, i.e., lowering, drives the backrest rearward relative to the seat pan. Each of the fixed frame 112 and the moving frame 114 may be rigid unitary constructions or may be assemblies made up of attached parts.

The backrest frame 104 further defines a plurality of rearwardly extending, linear guideways 122 configured to receive rearwardly extending, linear guides 124 formed on the backrest 106. In use, the guides 124 travel along the guideways 122 to control forward and rearward motion of the backrest 106 while maintaining squareness. Vertically oriented rollers 126 disposed adjacent the guideways 122 interact with the guides 124 to facilitate smooth rolling motion as the backrest 106 cycles between the forward and rearward positions. Although four guideway and guide pairings are shown, other numbers and configurations or guideways and guides are possible and envisioned.

The passenger seat 100 further includes an adjustment mechanism 128 for changing the backrest position relative to the seat pan 102. The adjustment mechanism 128 as shown includes an actuator 130 configured to interact with the moving frame 114 to drive backrest movement. As shown, the actuator 130 is implemented as an elongate linear rod defining first and second or upper and lower opposing ends. The upper end terminates in a handle 132 for manipulating the actuator. For example, the handle 132 is grabbed to rotate the actuator 130 in opposite directions to adjust the backrest 106 forward or rearward. The handle 132 may also be a knob or the like, and in some embodiments, may be coupled to an electrical actuator.

The lower end of the actuator 130 is externally threaded to be threadably engaged in an internally threaded opening 134 formed in a transverse member of the moving frame 114. The actuator 130 is disposed through an opening formed in a transverse member of the fixed frame 112 and the threaded end is coupled to the moving frame 114. Rotating the actuator 130 in a first direction causes the threaded end to advance into the moving frame 114 thereby raising the moving frame, and rotating the actuator in a second direction opposite the first direction causes the threaded end to withdraw from the moving frame thereby lowering the moving frame. The rotational functionality and threaded engagement between the actuator 130 and the moving frame 114 allow for stepless adjustability of the backrest position.

The handle 132 is positioned atop the fixed frame 112 to be accessible from above the seat. The adjustment mechanism may be operated by the seat occupant or flight crew depending on the application. The handle may be located elsewhere in other embodiments to be accessible by the seat occupant or concealed from view.

The passenger seat 100 further includes a plurality of links 136 coupling the backrest 106 to the backrest frame 104. Each link 136 is an elongate member pivotally attached at one end to the backrest 106 and at an opposing end to the backrest frame 104. In use, the links 136 move or orient toward horizontal as the backrest 106 translates forward and move or orient toward vertical as the backrest translates rearward. In other words, decreasing the distance between the upper extend of the moving frame 114 and the transverse member of the fixed frame 112 causes the links 136, which are rigid, to drive the backrest 106 forward and apart from the backrest frame 104, whereas increasing the distance between the moving frame and the transverse member of the fixed frame interacting with the handle cause the links to pull the backrest to toward the backrest frame. In some embodiments, the number of links 136 corresponds to the number of guideway/guide pairings to maintain stability and squareness.

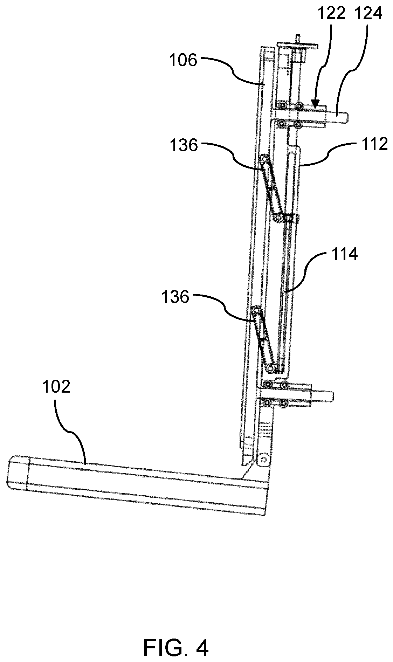

Referring to FIG. 4, the moving frame 114 is shown in its lowest position relative to the fixed frame 112 and with the links 136 most vertical thereby corresponding to a fully rearward or retracted position of the backrest 106 relative to the seat pan 102. Such a backrest position accommodates seat occupants of greater stature.

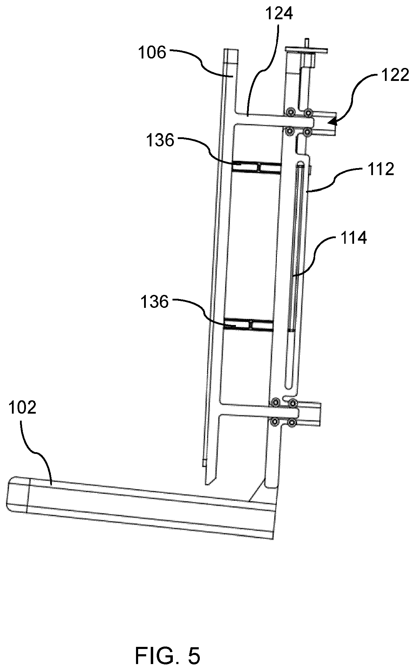

Referring to FIG. 5, the moving frame 114 is shown in its highest position relative to the fixed frame 112 and with the links 136 most horizontal thereby corresponding to a fully forward or extended position of the backrest 106. Such a backrest position accommodates seat occupants of lesser stature as the seat pan length effectively 'shortens'. The amount of backrest adjustability, determined by at least one of the length of the elongate slots, interaction of the actuator with the moving frame, and length of the links, may be customized for different applications and to achieve different amounts of adjustability. Comparing FIGS. 4 and 5 further shows the guides 124 advancing and retreating relative to the guideways 122.

While the foregoing description provides embodiments of the invention by way of example only, it is envisioned that other embodiments may perform similar functions and/or achieve similar results and still fall within the scope of the invention as defined by the claims.

## Claims

1. A passenger seat (100); comprising:
a seat pan (102);
a backrest frame (104) coupled to the seat pan;
a backrest (106) supported by the backrest frame; and
an adjustment mechanism (128) coupling the backrest to the backrest frame, the adjustment mechanism operable to change a position of the backrest relative to the seat pan; wherein the backrest frame includes:
a fixed frame (112) including spaced vertical members (108) and at least one transverse member (110); and
a moving frame (114) movably coupled to the fixed frame;
wherein movement of the moving frame relative to the fixed frame in a first direction causes the backrest to translate forward relative to the seat pan, and movement of the moving frame relative to the fixed frame in a second direction opposite the first direction causes the backrest to translate rearward relative to the seat pan; and **characterized in that** the adjustment mechanism includes:
an actuator (130) rotatably disposed through an opening formed in the at least one transverse member of the backrest frame, the actuator having an externally threaded end threadably engaged in an internally threaded opening formed in the moving frame, wherein rotating the actuator in a first rotational direction advances the actuator in the internally threaded opening to raise the moving frame relative to the fixed frame and rotating the actuator in a second rotational direction opposite the first rotational direction lowers the moving frame relative to the fixed frame; and
a plurality of links (136) coupled between the moving frame and the backrest, wherein the plurality of links translate the backrest forward as the moving frame raises and translate the backrest rearward as the moving frame lowers relative to the fixed frame.

2. The passenger seat (100) according to claim 1, wherein:
each of the spaced vertical members (108) defines an elongate linear slot (116); the moving frame (114) is disposed in and travels along the elongate linear slots of the spaced vertical members; and
each of the spaced vertical members (108) defines at least one guideway (122) receiving at least one guide (124) of the backrest, the at least one guide configured to travel along the at least one guideway as the backrest (106) translates relative to the backrest frame (104).

3. The passenger seat (100) according to claim 1, wherein the actuator (130) includes a handle (132) formed at an end of the actuator opposite the externally threaded end operable for rotating the actuator, and wherein the handle is positioned above the backrest frame (104).

4. The passenger seat (100) according to any preceding claim, wherein each of the plurality of links (136) are pivotally attached at opposing ends to the moving frame (114) and the backrest (106).

5. The passenger seat (100) according to claim 2, further comprising vertically oriented rollers (126) positioned along the at least one guideway (122) facilitating movement of the at least one guide (124) along the at least one guideway.

6. The passenger seat (100) according to any preceding claim, wherein the seat pan (102) is fixed, the backrest frame (104) is pivotally attached to the seat pan, and pivoting motion of the backrest frame relative to the seat pan is independent of translation motion of the backrest relative to the seat pan.

## Patentansprüche

1. Fahrgastsitz (100), umfassend:
eine Sitzfläche (102);
einen Rückenlehnenrahmen (104), der an die Sitzfläche gekoppelt ist;
eine Rückenlehne (106), die durch den Rückenlehnenrahmen gestützt ist; und
einen Verstellmechanismus (128), der die Rückenlehne an den Rückenlehnenrahmen koppelt, wobei der Verstellmechanismus dazu dient, eine Position der Rückenlehne relativ zu der Sitzfläche zu ändern; wobei der Rückenlehnenrahmen Folgendes beinhaltet:
einen festen Rahmen (112), der beabstandete vertikale Elemente (108) und mindestens ein Querelement (110) beinhaltet; und
einen beweglichen Rahmen (114), der beweglich an den festen Rahmen gekoppelt ist;
wobei eine Bewegung des beweglichen Rahmens relativ zu dem festen Rahmen in einer ersten Richtung dazu führt, dass sich die Rückenlehne relativ zu der Sitzfläche nach vorne verlagert, und eine Bewegung des beweglichen Rahmens relativ zu dem festen Rahmen in einer zweiten Richtung entgegengesetzt zu der ersten Richtung dazu führt, dass sich die Rückenlehne relativ zu der Sitzfläche nach hinten verlagert; und **dadurch gekennzeichnet, dass** der Verstellmechanismus Folgendes beinhaltet:
einen Aktuator (130), der drehbar durch eine Öffnung angeordnet ist, die in dem mindestens einen Querelement des Rückenlehnenrahmens ausgebildet ist, wobei der Aktuator ein Ende mit Außengewinde aufweist, das in eine Öffnung mit Innengewinde, die in dem beweglichen Rahmen ausgebildet ist, eingeschraubt ist, wobei ein Drehen des Aktuators in einer ersten Drehrichtung den Aktuator in der Öffnung mit Innengewinde vorwärts bewegt, um den beweglichen Rahmen relativ zu dem festen Rahmen anzuheben, und ein Drehen des Aktuators in einer zweiten Drehrichtung entgegengesetzt zu der ersten Drehrichtung den beweglichen Rahmen relativ zu dem festen Rahmen absenkt; und
eine Vielzahl von Verbindungselementen (136), die zwischen dem beweglichen Rahmen und der Rückenlehne gekoppelt ist, wobei die Vielzahl von Verbindungselementen die Rückenlehne nach vorne verlagert, wenn sich der bewegliche Rahmen anhebt, und die Rückenlehne nach hinten verlagert, wenn sich der bewegliche Rahmen relativ zu dem festen Rahmen absenkt.

2. Fahrgastsitz (100) nach Anspruch 1, wobei:
jedes der beabstandeten vertikalen Elemente (108) einen länglichen linearen Schlitz (116) definiert;
der bewegliche Rahmen (114) in den länglichen linearen Schlitzen der beabstandeten vertikalen Elemente angeordnet ist und entlang dieser verfährt; und
jedes der beabstandeten vertikalen Elemente (108) mindestens eine Führungsschiene (122) definiert, die mindestens eine Führung (124) der Rückenlehne aufnimmt, wobei die mindestens eine Führung dazu konfiguriert ist, entlang der mindestens einen Führungsschiene zu verfahren, wenn sich die Rückenlehne (106) relativ zu dem Rückenlehnenrahmen (104) verlagert.

3. Fahrgastsitz (100) nach Anspruch 1, wobei der Aktuator (130) einen Griff (132) beinhaltet, der an einem Ende des Aktuators gegenüber dem Ende mit Außengewinde ausgebildet ist und zum Drehen des Aktuators dient und wobei der Griff über dem Rückenlehnenrahmen (104) positioniert ist.

4. Fahrgastsitz (100) nach einem der vorhergehenden Ansprüche, wobei jedes der Vielzahl von Verbindungselementen (136) an gegenüberliegenden Enden schwenkbar an dem beweglichen Rahmen (114) und der Rückenlehne (106) angebracht ist.

5. Fahrgastsitz (100) nach Anspruch 2, ferner umfassend vertikal ausgerichtete Rollen (126), die entlang der mindestens einen Führungsschiene (122) positioniert sind und eine Bewegung der mindestens einen Führung (124) entlang der mindestens einen Führungsschiene erleichtern.

6. Fahrgastsitz (100) nach einem der vorhergehenden Ansprüche, wobei die Sitzfläche (102) fest ist, der Rückenlehnenrahmen (104) schwenkbar an der Sitzfläche angebracht ist und eine Schwenkbewegung des Rückenlehnenrahmens relativ zu der Sitzfläche unabhängig von einer Verlagerungsbewegung der Rückenlehne relativ zu der Sitzfläche ist.

## Revendications

1. Siège passager (100) comprenant :
un plateau de siège (102) ;
un cadre de dossier (104) accouplé au plateau de siège ;
un dossier (106) supporté par le cadre de dossier ; et
un mécanisme de réglage (128) accouplant le dossier au cadre de dossier, le mécanisme de réglage pouvant fonctionner pour modifier une position du dossier par rapport au plateau de siège ; dans lequel le cadre de dossier comporte :
un cadre fixe (112) comportant des éléments verticaux espacés (108) et au moins un élément transversal (110) ; et
un cadre mobile (114) accouplé de manière mobile au cadre fixe ;
dans lequel le mouvement du cadre mobile par rapport au cadre fixe dans une première direction provoque la translation du dossier vers l'avant par rapport au plateau de siège, et le mouvement du cadre mobile par rapport au cadre fixe dans une seconde direction opposée à la première direction provoque la translation du dossier vers l'arrière par rapport au plateau de siège ; et **caractérisé en ce que** le mécanisme de réglage comporte :
un actionneur (130) disposé de manière rotative à travers une ouverture formée dans l'au moins un élément transversal du cadre de dossier, l'actionneur ayant une extrémité filetée extérieurement en prise par vissage avec une ouverture filetée intérieurement formée dans le cadre mobile, dans lequel la rotation de l'actionneur dans une première direction de rotation fait avancer l'actionneur dans l'ouverture filetée intérieurement pour soulever le cadre mobile par rapport au cadre fixe et la rotation de l'actionneur dans une seconde direction de rotation opposée à la première direction de rotation abaisse le cadre mobile par rapport au cadre fixe ; et
une pluralité de liaisons (136) accouplées entre le cadre mobile et le dossier, dans lequel la pluralité de liaisons déplacent le dossier en translation vers l'avant lorsque le cadre mobile se soulève et déplacent le dossier en translation vers l'arrière lorsque le cadre mobile s'abaisse par rapport au cadre fixe.

2. Siège passager (100) selon la revendication 1, dans lequel :
chacun des éléments verticaux espacés (108) définit une fente linéaire allongée (116) ;
le cadre mobile (114) est disposé dans et se déplace le long des fentes linéaires allongées des éléments verticaux espacés ; et
chacun des éléments verticaux espacés (108) définit au moins un chemin de guidage (122) recevant au moins un guide (124) du dossier, le ou les guides étant configurés pour se déplacer le long du ou des chemins de guidage lorsque le dossier (106) se déplace en translation par rapport au cadre de dossier (104).

3. Siège passager (100) selon la revendication 1, dans lequel l'actionneur (130) comporte une poignée (132) formée à une extrémité de l'actionneur opposée à l'extrémité filetée extérieurement pouvant fonctionner pour faire tourner l'actionneur, et dans lequel la poignée est positionnée au-dessus du cadre de dossier (104).

4. Siège passager (100) selon une quelconque revendication précédente, dans lequel chacune de la pluralité de liaisons (136) est fixée de manière pivotante à des extrémités opposées au cadre mobile (114) et au dossier (106).

5. Siège passager (100) selon la revendication 2, comprenant également des rouleaux orientés verticalement (126) positionnés le long du ou des chemins de guidage (122) facilitant le mouvement du ou des guides (124) le long du ou des chemins de guidage.

6. Siège passager (100) selon une quelconque revendication précédente, dans lequel le plateau de siège (102) est fixe, le cadre de dossier (104) est fixé de manière pivotante au plateau de siège, et le mouvement de pivotement du cadre de dossier par rapport au plateau de siège est indépendant du mouvement de translation du dossier par rapport au plateau de siège.
